# EUROPEAN PATENT APPLICATION

(11) **EP 3 138 682 A1**
(43) Date of publication of application: **08.03.2017**
(21) Application number: 15786706.0
(22) Date of filing: 24.04.2015
(51) Int. Cl.: B29C 51/12, B29C 51/42

(54) **THERMOFORMING APPARATUS**

(30) Priority: 02.05.2014 JP 2014095398
(71) Applicant: Asano Laboratories Co., Ltd., Aichi 470-0151 (JP)
(72) Inventor: MIZOGUCHI, Kenichi, Aichi-gun Aichi 470-0151 (JP); TERAMOTO, Kazunori, Aichi-gun Aichi 470-0151 (JP)
(74) Representative: Potter Clarkson LLP
(86) International application number: PCT/JP2015/062539
(87) International publication number: WO 2015/166889

(57) **Abstract**

A thermoforming apparatus includes a frame material having a housing region and a frame edge portion of a base material being a thermoforming target; and a heating plate having a square shaped heating surface in a plan view, and a frame section which protrudes toward the frame material from the outer peripheral edge of the heating surface, the frame section being contactable with the frame edge portion of the frame material, wherein the heating plate is provided with vacuum holes opening to the outer peripheral portion of the heating plate in a plan view at a perimeter of the frame section in the heating surface, and before adsorbing the sheet disposed between the frame edge portion of the frame material and the outer peripheral edge of the heating plate to the heating surface, a gap is included in at least a portion between the sheet and the heating surface.

## Description

### [Technical Field]

The present invention relates to a thermoforming apparatus that thermoforms a sheet for a mold shaping or being bonded to a base material.

### [Description of Related Art]

In the related art, as an apparatus that bonds a sheet to an outer surface of a molding base material, a vacuum press lamination type thermoforming apparatus is known (e.g., see Patent Document 1).

Here, the conventional thermoforming apparatus disclosed in Patent Document 1 is provided with upper and lower chambers, the lower chamber is capable of housing the molding base material and setting the sheet to a peripheral portion of the upper chamber side, and the upper chamber has a heating plate provided with a heater. The upper chamber is connected to a vacuum tank and a pressure tank and is capable of evacuating and pressurizing an interior of the chamber, and the lower chamber is configured to be able to evacuate the interior of the chamber connected to the vacuum tank.

As a molding method using such a thermoforming apparatus, first, the base material and the sheet are set in the lower chamber, the upper chamber is moved downward, and the interior of the upper and lower chambers are set to an airtight state under atmospheric pressure. Next, the interior of the upper and lower chambers are set to a vacuum state, and the sheet is heated by the heating plate of the upper chamber. Further, a table in the lower chamber is raised and only the interior of the upper chamber is changed to the atmospheric pressure state, thereby the sheet is molded by being pressed against the base material (metal mold). Next, by changing the upper chamber to the slight vacuum state, the mold releasing is performed and thermoforming is performed.

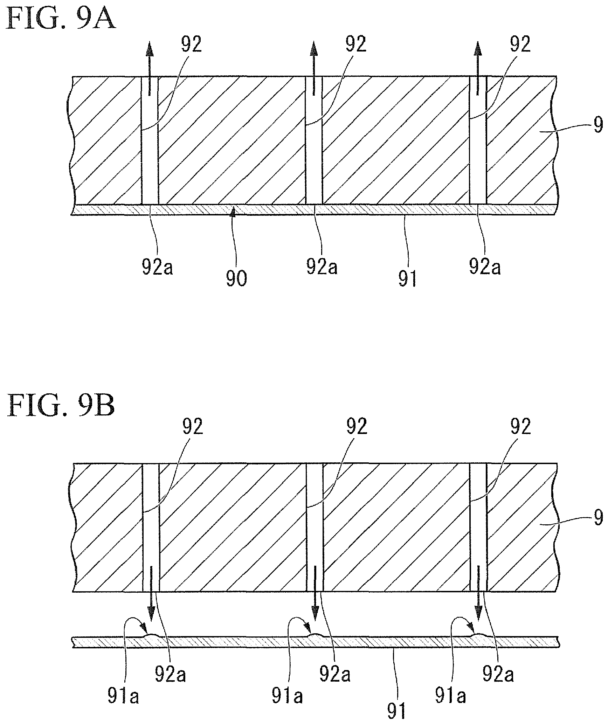

In a general heating plate of the thermoforming apparatus configured in this way, as shown in Fig. 9A, a plurality of vacuum holes 92 are machined over the entire heating surface 90 which adsorbs and heats the sheet 91.

### [Prior Art Document]

### [Patent Document]

### [Patent Document 1]

Japanese Patent Publication No. 3102916

### [Summary of Invention]

### [Problems to be Solved by the Invention]

In the sheet heating by using the conventional heating plate, as shown in Fig. 9B, when the sheet 91 is peeled off from the heating surface 90 after heating, the suction hole traces (reference numeral 91a shown in FIGS. 9A and 9B) of the vacuum holes 92 provided on the heating surface are transferred onto the entire sheet surface. Therefore, transparency and brightness of the sheet are degraded, and the design property and the commercial value are debased.

Furthermore, the conventional heating plate is configured such that: a plurality of vacuum holes are provided over the entire surface of the heating surface; and when the sheet is adsorbed to the heating surface, the entire surface of the sheet is simultaneously adsorbed to the heating surface by simultaneously vacuum-suctioning the air via all the vacuum holes. However, the sheet which softens is likely to occlude the vacuum holes before an air is completely evacuated.

Therefore, since an outlet for air disappears, an air reservoir is generated between the heating surface and the sheet. Thereby, the lower luminance and uneven heating occur in the sheet due to a pit caused by the air reservoir.

An object of the present invention is provide a thermo forming apparatus which is capable of molding a sheet without considerably degrading the characteristics of transparency and lower luminance of the sheet by suppressing generation of an air reservoir at the time of sheet softening by heating.

### [Means for Solving the Problems]

According to a first aspect of the present invention, the thermoforming apparatus includes a frame material having a frame edge portion and a housing region for a base material which is a thermoforming target, and a heating plate having a heating surface which has a square shape in a plan view, and a frame section which protrudes toward the frame material from an outer peripheral edge of the heating surface, the frame section being capable of contacting with the frame edge portion of the frame material, wherein the heating plate is provided with vacuum holes that open to the outer peripheral portion of the heating plate in a plan view, the vacuum holes being positioned at a perimeter of the heating surface with respect to the frame section, and before adsorbing the sheet which is disposed between the frame edge portion of the frame material and the outer peripheral edge of the heating plate to the heating surface, a gap is included in at least a portion between the sheet and the heating surface.

According to the above-described thermoforming apparatus, by disposing the sheet between the frame edge portion of the frame material and the outer peripheral edge of the heating plate, and by suctioning the sheet by using the vacuum holes, the sheet is adsorbed to the heating plate and is heated to a predetermined temperature. Thereafter, by opening the gap between the heating plate and the sheet to the atmosphere or pressurizing the gap, and by generating a pressure difference between the upper and lower spaces with the sheet interposed therebetween, the sheet softened by heating is peeled off from the heating surface of the heating plate, and is moved toward the base material. Thus, the sheet is pressed against the surface of the base material and is bonded to the mold shaping or the base material.

In this case, since the openings of the vacuum holes of the heating plate are at a position of the outer peripheral portion of the heating surface, the position of the suction portion of the sheet suctioned by the opening portions is capable of being set to a position at which it does not interfere with the design of the molded article (base material). Therefore, even if the suction hole traces of the vacuum holes are transferred onto the sheet surface, a design surface of the thermoformed article in which the suction hole traces on the sheet are bonded to the mold shaping or the base material is not caused, and the thermoforming apparatus is possible to perform molding in which degradation of transparency and the brightness of the thermoformed article is suppressed.

Further, according to the aforementioned thermoforming apparatus, before the adsorption of the sheet to the heating surface, a gap is provided at least a portion between the sheet and the heating surface, and the vacuum holes of the heating plate are provided at the position of the outer peripheral portion of the heating surface. Thus, when the suction is performed by using the vacuum holes, air between the heating surface and the sheet flows toward the outer peripheral portion of the heating surface and is suctioned from the vacuum holes. That is, since the vacuum holes are disposed only at the position of the outer peripheral portion of the heating surface and are not disposed in the central portion of the heating surface, for example, when the vacuum holes are provided uniformly over the entire outer peripheral portion of the heating surface, the sheet is capable of being gradually and radially adsorbed toward the outer peripheral portion from the central portion of the heating surface.

Therefore, it is possible to suppress generation of an air reservoir due to absence of the outlet for air as in the related art, the sheet is capable of being uniformly heated over the entire surface, and the sheet is capable of being softened without uneven heating.

Therefore, it is possible to reduce the pit associated with the air reservoir generated in the sheet softened by heating, the design property of the mold shaping or the thermoformed article bonded with the base material is not impaired, and it is possible to suppress the degradation of the quality.

According to a second aspect of the present invention, in the thermoforming apparatus, the heating surface may be worked to surface roughening.

In this case, the heating surface is worked an appropriate surface roughening with a level in which the transparency and brightness of the sheet are not degraded and the air reservoir is not generated between the heating surface and the sheet. Thus, a fine circulating portion due to unevenness of the roughness is formed between the heating surface and the sheet bonded to the heating surface. Therefore, since the air between the heating surface and the sheet is suctioned to the vacuum vent holes through the circulating portion at the time of suction, the air is capable of being suctioned even after the sheet is adsorbed to the heating surface, which makes it possible to more reliably release the air. Further, by working the surface roughening on the heating surface, the sheet softened by the fine unevenness of the roughness is capable of easily release from the heating surface.

According to a third aspect of the present invention, in the thermoforming apparatus, the entire heating surface may be worked to a surface treatment for heat resistance and a mold releasing property.

In this case, even if the sheet is softened by the heating to come into close contact with the heating surface, since the heating surface has the heat resistance and mold releasing property over the entire surface, when the suction by using the vacuum holes is stopped after heating, the sheet is capable of immediately and uniformly peeling off from the heating surface. Therefore, the whole sheet peeled off from the heating surface is capable of being uniformly and simultaneously moved toward the base material, the metal mold shaping or the base material bonding is capable of being performed while suppressing the positional deviation between the sheet and the base material, and it is possible to prevent degradation of the quality of the molded article.

According to a fourth aspect of the present invention, in the thermoforming method, the heating surface may be formed with a spherical protruding surface in which a central portion protrudes toward the frame material in a plan view as the whole heating surface.

In this case, since the heating surface of the heating plate is a monotonic protruding surface, when performing the suction by the vacuum holes provided in the outer peripheral portion of the heating surface, the air between the heating surface and the sheet easily moves toward the vacuum holes along the protruding surface, and it is possible to more reliably prevent the generation of an air reservoir.

Further, in this case, the sheet is stretched by linear expansion by using the curvature of the protruding surface, and the remaining portion escapes into the gap formed near the outer peripheral side of the heating surface between the heating surface and the sheet by the stretching, and is adsorbed to the heating surface. Thus, it is possible to heat the sheet with no air reservoir.

### [Effects of the Invention]

According to the above-described thermoforming apparatus, the thermoforming apparatus is possible to mold the sheet without degrading the transparency and the brightness as the characteristics of the sheet by suppressing the generation of an air reservoir at the time of sheet softening by heating.

### [Brief Description of Drawings]

Fig. 1 is a diagram showing a schematic configuration of a thermoforming apparatus according to an embodiment of the present invention.
Fig. 2 is a cross-sectional view of a main part representing a heating plate of the thermoforming apparatus shown in Fig. 1.
Fig. 3 is a diagram taken along the line A-A shown in Fig. 1 and is a plan view in which the heating plate is viewed from below.
Fig. 4 is a cross sectional view along a lateral direction showing a state during heating of the sheet by using the heating plate.
Fig. 5A is a diagram that explains a sheet suction state of a heating plate side vent hole.
Fig. 5B is a diagram that explains the sheet suction state of the heating plate side vent hole.
Fig. 6 is a cross sectional view along a lateral direction showing an operation procedure of a thermoforming method subsequent to Fig. 4.
Fig. 7A is a cross-sectional view of a main part representing the heating plate of the thermoforming apparatus according to the first modified example, and the diagram showing prior to heating of the sheet.
Fig. 7B is a cross-sectional view of a main part representing the heating plate of the thermoforming apparatus according to the first modified example, and the diagram showing heating process of the sheet.
Fig. 8A is a cross-sectional view of a main part representing the heating plate of the thermoforming apparatus according to a second modified example, and the diagram showing a state prior to heating of the sheet.
Fig. 8B is a cross-sectional view of a main part representing a heating plate of the thermoforming apparatus according to the second modified example, and the diagram showing heating process of the sheet.
Fig. 9A is a cross-sectional view showing a worked surface of a conventional heating plate, and the diagram showing a state of heating process of the sheet.
Fig. 9B is a cross-sectional view showing the worked surface of the conventional heating plate, and the diagram showing a state in which the sheet is detached from the heating surface after the sheet has been heated.

### [Description of Embodiments]

Hereinafter, a thermoforming apparatus according to an embodiment of the present invention will be described with reference to the drawings.

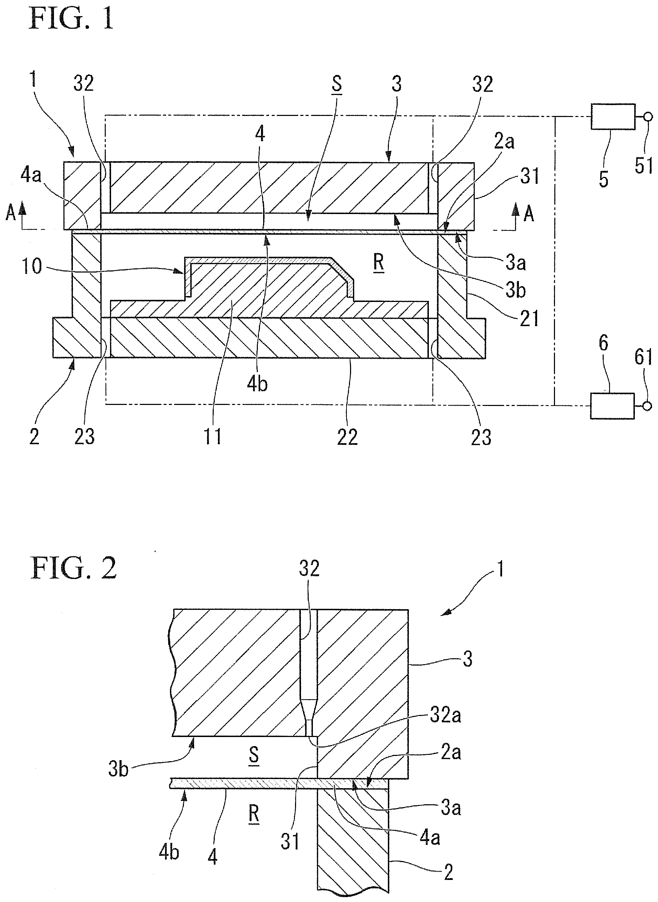

As shown in Fig. 1, a thermoforming apparatus 1 according to the present embodiment is used for coated molding in which a sheet 4 is bonded to a base material 10.

The thermoforming apparatus 1 includes a lower frame 2 having a space (housing region R) which is capable of housing the base material 10, and a heating plate 3 having a contact surface 3 a which is capable of contacting with a frame top edge portion 2a of the lower frame 2. The thermoforming apparatus 1 is configured such that a sheet 4 made of a resin is disposed between the lower frame 2 and the heating plate 3, and a thermoforming in which the sheet 4 is heated and is bonded to the base material 10 is performed. Here, the base material 10 becomes a thermoformed article when the sheet 4 is bonded, and is held by a base material jig 11 in the thermoforming apparatus 1.

As the thermoforming apparatus 1, it is not limited to the coated molding, general thermoforming methods such as a vacuum molding or air-pressure forming for molding the sheet into a metal mold shape are applied.

The lower frame 2 and the heating plate 3 are vertically disposed, and the heating plate 3 is disposed above the lower frame 2.

The lower frame 2 is made up of a metallic member and has the housing region R surrounded by a peripheral wall portion 21 having a square shape in a plan view, and a plurality of lower frame side vent holes 23 that communicate with the housing region R are formed near the peripheral wall portion 21 of the lower part 22. The lower frame side vent holes 23 are connected to a vacuum tank 5 equipped with a vacuum pump 51. At the time of molding, the housing region R is capable of being depressurized by driving the vacuum pump 51 to be vacuum-suctioned.

The lower frame 2 is capable of nipping and fixing the outer peripheral portion 4a of the sheet 4 between the frame top edge portion 2a and the contact surface 3 a of the heating plate 3. That is, in a state in which the sheet 4 is nipped between the lower frame 2 and the heating plate 3, the housing region R of the lower frame 2 side and a space (a gap S to be described later) at the heating plate 3 side, which are formed vertically so as to interpose the sheet, are isolated by the sheet 4.

The lower frame 2 is provided on a stand (not shown) which is capable of sliding on a floor, and is capable of advancing and retracting between a supply position of the sheet 4 and a molding position of the lower side of the heating plate 3.

The heating plate 3 has a frame section 31 on an outer peripheral edge in a plan view as viewed from below, a lower surface of the frame section 31 is the contact surface 3 a, and the heating plate 3 has a heating surface 3b that has a smooth planar shape at a position recessed above the contact surface 3a. Further, the heating plate 3 is provided to be vertically movable toward and away from the lower frame 2, and the contact surface 3 a is disposed in close contact with the frame top edge portion 2a of the lower frame 2 when the heating plate 3 moves downward.

Here, a recess dimension of the heating surface 3b, i.e., a height dimension between the contact surface 3 a and the heating surface 3b, is, for example, 1 to 10 mm. As described above, the height dimension corresponds to the gap S formed between the sheet 4 and the heating surface 3b at the top of the sheet 4 which is nipped between the frame top edge portion 2a of the lower frame 2 and the contact surface 3 a of the heating plate 3.

A plurality of heaters (not shown) are provided on an upper surface of the heating plate 3, and the heating surface 3b is heated to, for example, a temperature of 80 to 250 °C in a softening temperature range of a general thermoplastic sheet.

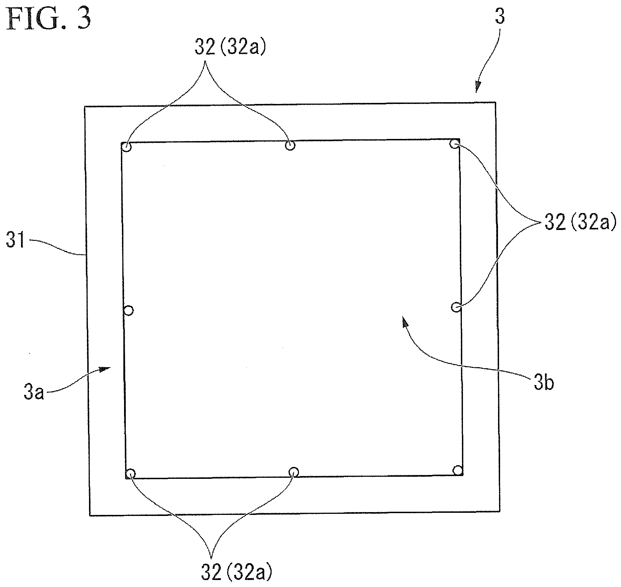

Further, as shown in Figs. 2 and 3, the heating plate 3 is provided with a plurality of the heating plate side vent holes 32 (vacuum holes) at positions near the frame section 31 of the heating surface 3b. The heating plate side vent holes 32 are formed on the heating plate 3 by drilling, the heating plate side vent holes 32 are provided at a total of eight locations which are corner portions of four corners and the central portions of each side on the heating surface 3b having a square shape in a plan view as viewed from below. The heating plate side vent holes 32 open toward the heating surface 3b.

The heating plate side vent holes 32 are connected to the vacuum tank 5 equipped with the vacuum pump 51 that performs the vacuum-suction on the heating surface 3b, and a pressure tank 6 that stores the compressed air provided by the compressor 61. By providing the vacuum tank 5, depressurization loss is capable of being reduced.

The vacuum pump 51 and the vacuum tank 5 are possible to use those common to the vacuum pump which is connected to the lower frame side vent holes 23. By providing such a depressurizing and pressurizing means, at the time of thermoforming, the thermoforming apparatus 1 has a configuration such that the vacuum suction is capable of performed by opening the vacuum tank 5 which is maintained in a vacuum state from the lower frame 2, or the pressurization of the housing region R from the heating surface 3b is capable of performing by supplying the compressed air from the pressure tank 6.

Here, the vacuum degree may be enhanced by directly suctioning the air by the drive of the vacuum pump 51, without providing the vacuum tank 5.

The heating surface 3b of the heating plate 3 is subjected to a surface treatment and surface roughening in order to provide both heat resistance and a mold releasing property. As the surface roughening, well-known embossing or the like may be adopted. For example, when embossing is performed and the smoothness of the heating surface 3b is low, the roughness is 10 µm or less. For comparison, when embossing is not performed and the smoothness (brightness) of the heating surface 3b is high, the roughness is 0.5 µm or less.

Further, for the surface treatment of the heating surface 3b, for example, there are Teflon (registered trademark) treatment, fluorine treatment, mold releasing agents, powders and the like.

The sheet 4 bonded to a surface of the base material 10 is fixed in a horizontal state such that its outer peripheral portion 4a is nipped between the frame top edge portion 2a of the lower frame 2 and the contact surface 3a of the heating plate 3. The base material 10 side (the lower surface 4b) of the sheet 4 serves as an adhesive layer, and a gap is provided between the lower surface 4b and the base material 10. If a gap between the base material 10 and the heating plate 3 (sheet 4) is, for example, about 5 mm, molding is capable of being performed, and a recess (housing region R) of the lower frame 2 is capable of being minimized by reducing the gap.

The thermoforming apparatus 1 performs control of: adsorbing and heating the sheet 4 by the heating plate 3 while bringing the lower frame 2 and the heating plate 3 into close contact with each other with the sheet 4 which is interposed therebetween; stopping the adsorption operation using the heating plate 3 after a predetermined time from the beginning of the operations; and opening a gap between the heating plate 3 and the sheet 4 to the atmosphere or pressurizing the gap.

Next, a thermoforming method of covering and bonding the sheet 4 to the base material 10 using the aforementioned thermoforming apparatus 1 will be described with reference to the accompanying drawings.

First, as shown in Fig. 1, the sheet 4 is provided in a state in which the sheet 4 is placed on the frame top edge portion 2a of the lower frame 2 in which the base material 10 is set on the base material jig 11 of the housing region R, and the heating plate 3 is moved downward and the sheet 4 is nipped between the contact surface 3 a and the frame top edge portion 2a. That is, after the sheet 4 is disposed on the frame top edge portion 2a of the lower frame 2 so as to occlude the opening of the housing region R, the heating plate 3 is moved downward until the frame section 31 of the heating plate 3 contacts with the frame top edge portion 2a, while the sheet 4 is interposed between the frame section 31 and the frame top edge portion 2a. At this time, the sheet 4 is disposed over the entire heating surface 3b of the heating plate 3 with a predetermined gap, and is held in a state in which its outer peripheral portion 4a is nipped by the lower frame 2 and the heating plate 3.

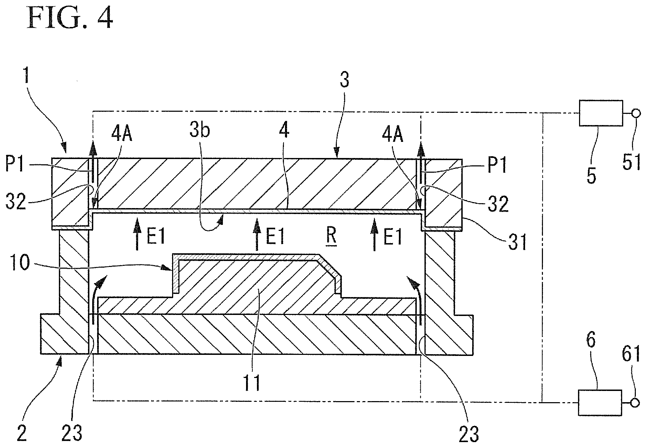

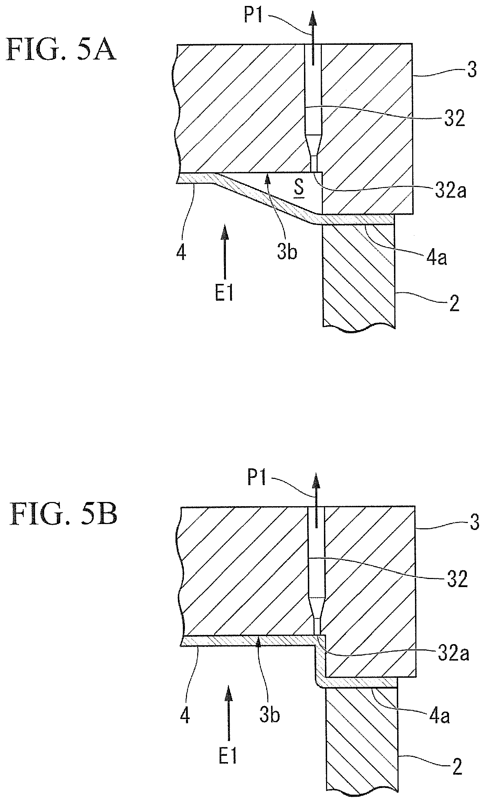

Subsequently, as shown in Fig. 4, the vacuum tank 5 is opened to perform the vacuum suction (direction of arrow P1) via the heating plate side vent holes 32, thereby, the gap S between the heating plate 3 and the sheet 4 is depressurized, and the sheet 4 is adsorbed and heated to the heating surface 3b of the heating plate 3. At this time, as shown in Fig. 3, since the heating plate side vent holes 32 are disposed on an outer peripheral portion of the heating surface 3b, i.e., at a perimeter with respect to the frame section 31, air in the gap S flows toward the outer peripheral portion of the heating surface 3b due to depressurization and escapes from the heating plate side vent holes 32. Therefore, as shown in Fig. 5A, the sheet 4 is adsorbed toward the outer periphery from the center of the heating surface 3b in a plan view, and finally, as shown in Fig. 5B, the outer peripheral portion 4a of the sheet 4 is adsorbed to the outer peripheral portion (the opening portion 32a of the heating plate side vent hole 32) of the heating surface 3b.

When the sheet 4 is adsorbed to the heating surface 3b, the housing region R (a lower space of the sheet 4) may be depressurized via the lower frame side vent holes 23 of the lower frame 2 by opening the pressure tank 6, thereby promoting the adsorption of the sheet 4.

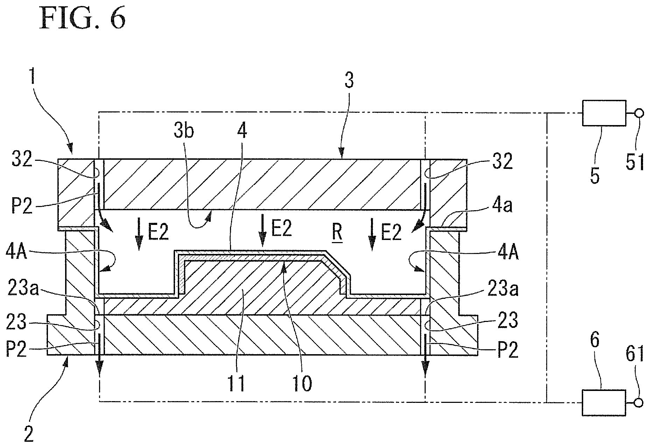

Further, as shown in Fig. 6, the vacuum adsorption is performed in a direction (direction of an arrow P2) in which the sheet 4 is moved downward via the heating plate side vent holes 32 by opening the vacuum tank 5 which is connected to the lower frame 2 at an appropriate timing during heating of the sheet 4, and the air of the housing region R of the lower side of the sheet 4 is suctioned and depressurized in the direction of arrow E2, thereby obtaining a high vacuum state.

Next, after the sheet 4 adsorbed to the heating plate 3 is heated to a predetermined temperature, the vacuum suction is stopped and the depressurization operation between the heating plate 3 and the sheet 4 is stopped in order to open this area to the atmosphere, thereby, a pressure difference is generated between the upper and lower spaces with the sheet 4 interposed therebetween. Thus, the sheet 4 softened by heating is peeled off from the heating surface 3b of the heating plate 3, the sheet 4 moves toward the base material 10 of the lower frame 2 (direction of arrow E2) and is pressed and bonded against the surface of the base material 10, thereby completing the molded article.

Here, in the sheet 4 bonded to the base material 10, a portion (suction portion 4A) contacting the opening portion 32a of the heating plate side vent hole 32 is located in the outer peripheral portion so that it does not interfere with the design surface of the molded article. In Fig. 6, the suction portion 4A is a portion that is located between the opening portion 23 a of the lower frame side vent hole 23 and the outer peripheral portion 4a and is cut.

Thereafter, the heating plate 3 is moved upward, the lower frame 2 is moved laterally from the lower position of the heating plate 3, and the molded article in the housing region R (the base material 10) is extracted. A series of molding operations is completed.

In such a thermoforming apparatus 1 of the present embodiment molded in this way, by automatically feeding the base material 10, the thermoforming apparatus 1 is applicable for the continuous molding by using a roll sheet.

Subsequent to heating of the sheet 4, it is not only the atmosphere opening, the sheet 4 may be pressurized toward the lower frame 2 via the heating plate side vent holes 32 by opening the pressure tank 6. That is, by switching the vacuum tank 5 connected to a heating plate side vent hole 3 shown in Fig. 4 into the pressure tank 6 and ejecting the compressed air from the heating plate side vent holes 32 to perform the pressurization, the pressing force (adhesive force) of the sheet 4 to the base material 10 is possible to increase.

Next, the operation of the aforementioned thermoforming apparatus 1 will be described with reference to the drawings.

In the present embodiment, as shown in Fig. 1, since the opening portions 32a of the heating plate side vent holes 32 of the heating plate 3 are located at the position of the outer peripheral portion of the heating surface 3b, the position of the suctioned portion of the sheet 4 suctioned by the opening portion becomes a position that does not interfere with the design of the molded article. Therefore, even if the suction hole trace 4A of the heating plate side vent hole 32 is transferred onto the sheet surface, the suction hole trace 4A on the sheet 4 does not position at a design surface of the thermoformed article, and a molding in which the degradation of the transparency and brightness of the molded article is suppressed is capable of performing.

Further, in the thermoforming apparatus 1 of the present embodiment, prior to adsorption of the sheet 4 to the heating surface 3b of the heating plate 3, there is a gap S between the sheet 4 and the heating surface 3b, and the heating plate side vent holes 32 are provided at the position near the frame section 31 of the heating surface 3b. Thus, when the suction is performed using the heating plate side vent holes 32, air between the heating surface 3b and the sheet 4 flows toward the outer peripheral portion of the heating surface 3b and is suctioned from the heating plate side vent holes 32 (see Figs. 5A and 5B). That is, since the heating plate side vent holes 32 are disposed only at the position of the outer peripheral portion of the heating surface 3b and are not disposed in the central portion of the heating surface 3b, when the heating plate side vent holes 32 are provided uniformly over the entire outer peripheral portion of the heating surface 3b as in the present embodiment, the sheet 4 is capable of being gradually and radially adsorbed toward the outer peripheral portion from the central portion of the heating surface 3b. Therefore, it is possible to suppress generation of an air reservoir due to absence of an outlet for air as in the related art, the sheet 4 is capable of being uniformly heated over the entire surface thereof, and the sheet 4 is capable of being softened without uneven heating.

Therefore, it is possible to reduce a pit which is associated with the air reservoir generated in the sheet 4 softened by heating, the design property of the thermoformed article bonded with the base material is not impaired, and degradation of the quality is capable of being suppressed.

Further, in the present embodiment, the heating surface 3b is worked an appropriate surface roughening with a level in which the transparency and brightness of the sheet 4 are not reduced and the air reservoir is not generated between the heating surface 3b and the sheet 4. Thus, a fine circulating portion due to unevenness of the roughness is formed between the heating surface 3b and the sheet 4 bonded to the heating surface 3b. Therefore, since the air between the heating surface 3b and the sheet 4 is suctioned to the heating plate side vent holes 32 through the circulating portion at the time of suction, the air is capable of being suctioned even after the sheet 4 is adsorbed to the heating surface 3b, which makes it possible to more reliably release the air. Further, by working the surface roughness on the heating surface 3b, there is an advantage that the sheet 4 softened by the fine unevenness of the roughness is easily released from the heating surface 3b.

Further, in the present embodiment, even if the sheet 4 is softened by the heating to come into close contact with the heating surface 3b of the heating plate 3, since the heating surface 3b has the heat resistance and mold releasing property over its entire surface, when the suction using the heating plate side vent holes 32 is stopped subsequent to heating, it is possible to immediately and uniformly peel off the sheet 4 from the heating surface 3b. Therefore, the whole sheet 4 peeled off from the heating surface 3b is capable of being uniformly and simultaneously moved toward the base material 10, adhesion is capable of being performed while suppressing the positional deviation of the sheet 4 to the base material 10, and it is possible to prevent the degradation of the quality of the molded article.

In the thermoforming apparatus according to the present embodiment as described above, by suppressing the generation of an air reservoir when softening the sheet by heating, there is an effect that the sheet 4 is capable of being molded without considerably lowering the characteristics of transparency and brightness of the sheet 4.

While embodiments of the thermoforming apparatus have been described, the present invention is not limited to the aforementioned embodiments, and is capable of being suitably changed within a scope that does not depart from the gist thereof.

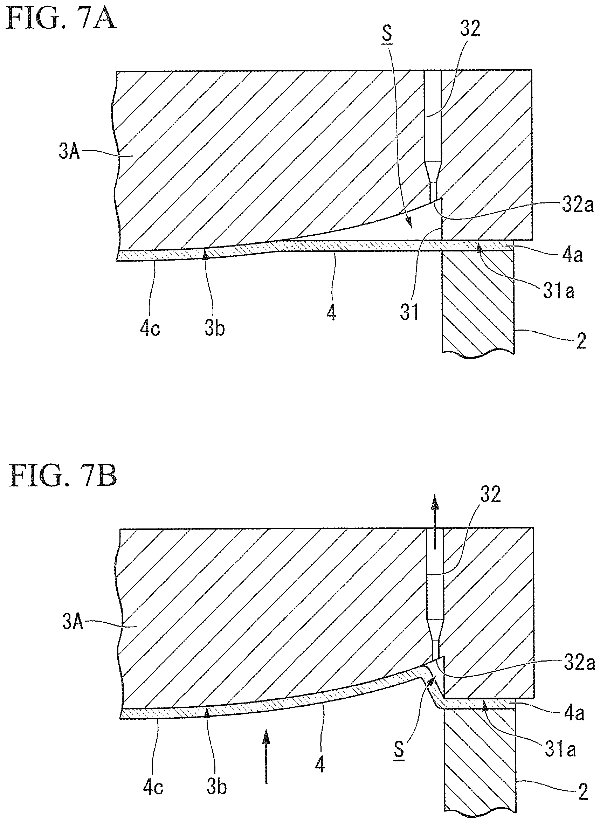

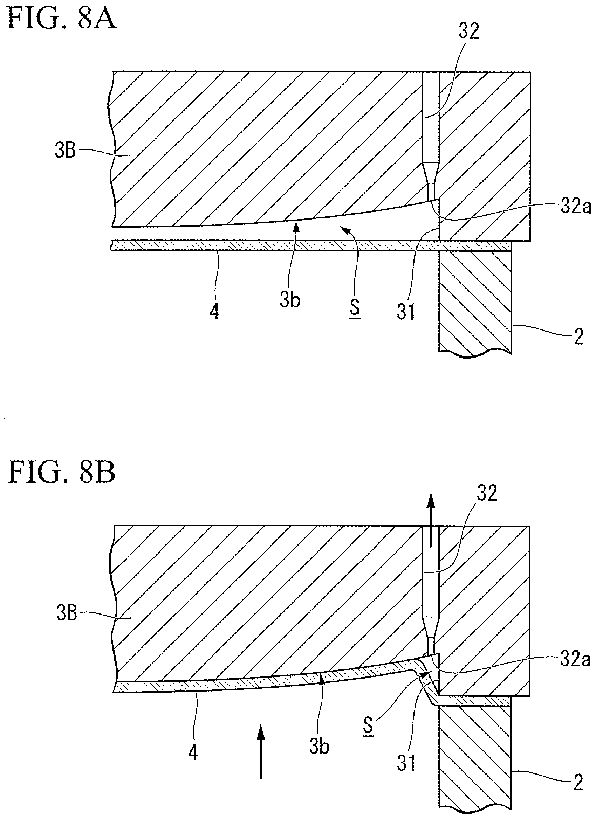

For example, although the heating surface 3b of the heating plate 3 has a planar shape in the present embodiment, it is not limited thereto, and as shown in Figs. 7A, 7B, 8A and 8B, a heating surface 3b formed with a monotonic protruding surface in which a central portion in a plan view protrudes toward the lower frame as the entire heating surface may be adopted.

For example, in the heating plate 3A of the thermoforming apparatus according to a first modified example shown in Figs. 7A and 7B, a central portion of a protruding heating surface 3b protrudes downward from the contact surface 3 a of the frame section 31. That is, the sheet 4 nipped between the lower frame 2 and the heating plate 3A is in a state in which a part (a center portion 4c in a plan view) comes into contact with the heating surface 3b, even in a state prior to the adsorption of performing the vacuum suction using the heating plate side vent holes 32. Therefore, the gap S between the sheet 4 and the heating surface 3b is only an outer peripheral portion of the sheet 4.

Moreover, the heating plate 3B of a thermoforming apparatus according to a second modified example shown in Figs. 8A and 8B has a constant gap S between the sheet 4 and the protruding heating surface 3b, prior to the adsorption of the sheet 4 to the heating surface 3b.

In the cases of the first modified example and the second modified example, since the heating surfaces 3b of the heating plates 3A and 3B are monotonic protruding surfaces, when the suction is performed by the heating plate side vent holes 32 provided in the outer peripheral portion of the heating surface 3b, the air between the heating surface 3b and the sheet 4 easily moves toward the heating plate side vent holes 32 along the protruding surface, and thus it is possible to more reliably prevent the generation of an air reservoir.

Further, in this case, the sheet 4 is stretched by the linear expansion using the curvature of the protruding surface, and the remaining portion escapes to the gap formed between the outer peripheral side of the heating surface 3b and the sheet 4 by the stretching and is adsorbed to the heating surface 3b. Thus, it is possible to heat the sheet 4 with no air reservoir.

Furthermore, although the curvature radius of the protruding surface of this case is capable of being arbitrarily set, a large curvature radius is preferable for improvement of air flow.

Further, in this embodiment, the positions of the heating plate side vent holes 32 are configured so that the opening portions 32a are located at the perimeter with respect to the frame section 31 of the heating surface 3b, but the positions and number are not limited. In short, the vacuum hole which opens to the position near the frame section 31 of the heating surface 3b may be provided, the vacuum hole may be at a position shifted toward the center from the perimeter in a plan view, and there is no limit to the number as long as the vacuum hole is at that position.

Further, although it is assumed that the heating plate side vent holes 32 are provided by drilling in the present embodiment, the invention is not limited thereto, and for example, a vacuum hole formed in a slit shape along the outer peripheral portion of the heating surface 3b may be provided.

Furthermore, although the present embodiment is configured to include working the surface roughness and the surface treatment for the heat resistance and the mold releasing property on the heating surface 3b of the heating plate 3, the surface roughness and the surface treatment may be omitted, and only one of the surface roughness and the surface treatment may be performed.

Further, although the thermoforming apparatus of the present embodiment is configured such that the heating plate 3 disposed on the upper side and the lower frame 2 is disposed on the lower side, the invention is not limited to such an embodiment, and an apparatus in which the heating plate is disposed on the lower side by being inverted upside down may be provided.

Further, in the present embodiment, the case in which the sheet 4 is bonded to the surface of the base material 10 is applied, and the base material 10 is housed in the housing region R of the lower frame 2, but the invention is not limited thereto. Specifically, it is also possible to apply a metal mold shaping which applies a metal mold in which the base material 10 and the lower frame 2 are integrally provided. In the case of the metal mold shaping, the heated sheet is formed into a metal mold shape.

In the present invention, "bonding" of the sheet to the base material includes a case in which a carrier film of an uppermost sheet layer is peeled off to transfer only a decorative layer onto the base material by the transfer trimless, as well as a case of the bonding molding that bonds the sheet itself to the base material 10, as in the present embodiment.

Further, although the heater is provided above the heating plate 3 in this embodiment, the invention is not limited to this embodiment, and a structure in which the heater is embedded in the heating plate 3 may be provided.

Furthermore, although the positions of the lower frame side vent holes 23 of the lower frame 2 are near the peripheral wall portion 21 of the lower part 22 in this embodiment, their positions are not limited. For example, in the case of the above-mentioned metal mold, the vent holes may be provided at a position at which communication with the recessed portion of the unevenness forming the metal mold is possible.

The shapes and the dimensions of the lower frame 2 and the heating plate 3 of this embodiment, and the configuration of the fixing means of the sheet 4 is capable of being arbitrarily set.

The constituent elements in the above-mentioned embodiments are capable of being appropriately replaced with well-known constituent elements within a scope that does not depart from the gist of the present invention.

### [Industrial Applicability]

According to the thermoforming apparatus of the present invention, the thermoforming apparatus is possible to mold the sheet without degrading the characteristics of transparency and brightness of the sheet by suppressing the generation of an air reservoir at the time of sheet softening by heating.

### [Description of Reference Numerals]

- 1:: Thermoforming apparatus
- 2:: Lower frame (frame material)
- 2a:: Frame top edge portion
- 3, 3A, 3B:: Heating plate
- 3a:: Contact surface
- 3b:: Heating surface
- 4:: Sheet
- 4A:: Suction hole trace
- 5:: Vacuum tank
- 6:: Pressure tank
- 10:: Base material
- 21:: Peripheral wall portion
- 23:: Lower frame side vent hole
- 31:: Frame section (outer peripheral edge)
- 32:: Heating plate side vent hole (vacuum hole)
- 32a:: Opening portion
- R:: Housing region
- S:: Gap

## Claims

1. A thermoforming apparatus comprising:
a frame material having a frame edge portion and a housing region for a base material which is a thermoforming target; and
a heating plate having a heating surface which has a square shape in a plan view, and a frame section which protrudes toward the frame material from an outer peripheral edge of the heating surface, the frame section being capable of contacting with the frame edge portion of the frame material,
wherein the heating plate is provided with vacuum holes that open to the outer peripheral portion of the heating plate in a plan view, the vacuum holes being positioned at a perimeter of the heating surface with respect to the frame section, and
before adsorbing the sheet which is disposed between the frame edge portion of the frame material and the outer peripheral edge of the heating plate to the heating surface, a gap is included in at least a portion between the sheet and the heating surface.

2. The thermoforming apparatus of claim 1,
wherein the heating surface is worked to surface roughening.

3. The thermoforming apparatus of claim 1 or 2,
wherein the entire heating surface is worked to a surface treatment for heat resistance and a mold releasing property.

4. The thermoforming apparatus of any one of claims 1 to 3,
wherein the heating surface is formed with a monotonic protruding surface in which a central portion protrudes toward the frame material in a plan view as the whole heating surface.
